(19) Europäisches Patentamt
European Patent Office
Office européen des brevets

(11) Veröffentlichungsnummer: **0 257 413**
**A2**

(12) **EUROPÄISCHE PATENTANMELDUNG**

(21) Anmeldenummer: **87111492.2**

(22) Anmeldetag: **08.08.87**

(51) Int. Cl.⁴: **C08L 27/06**, C08F 210/02, C08F 218/08, //(C08L27/06,23:08),(C08L27/06-,31:04)

(30) Priorität: **21.08.86 DE 3628315**

(43) Veröffentlichungstag der Anmeldung: **02.03.88 Patentblatt 88/09**

(84) Benannte Vertragsstaaten: **DE FR GB IT**

(71) Anmelder: **BAYER AG**
**Konzernverwaltung RP Patentabteilung**
**D-5090 Leverkusen 1 Bayerwerk(DE)**

(72) Erfinder: **Alberts, Heinrich, Dr.**
**Schulstrasse 1a**
**D-5068 Odenthal(DE)**
Erfinder: **Bartl, Herbert, Dr.**
**Eichendorffweg 10**
**D-5068 Odenthal(DE)**
Erfinder: **Billinger, Otto**
**Birkenstrasse 13**
**D-5460 Linz(DE)**
Erfinder: **Mietzsch, Fritz, Dr.**
**Hauptstrasse 364 W 1017**
**D-5060 Bergisch Gladbach(DE)**

(54) **Verwendung von speziellen Ethylen-Vinylacetat-Copolymeren zur Modifizierung von PVC.**

(57) Gegenstand der Erfindung ist die Verwendung von einpolymerisierte Säuren enthaltenden Ethylen-Vinylacetat-Copolymeren, die durch Emulsionspolymerisation hergestellt werden, zur Modifizierung von Polyvinylchlorid.

EP 0 257 413 A2

# Verwendung von speziellen Ethylen-Vinylacetat-Copolymeren zur Modifizierung von PVC

Gegenstand der Erfindung ist die Verwendung von Copolymeren aus 20 bis 79.9 Gew.-% Vinylacetat, 79.9 bis 20 Gew.-% Ethylen und 0.1 bis 20 Gew.-% einer ungesättigten Carbonsäure und/oder Sulfonsäure und/oder Phosphonsäure, bezogen jeweils auf 100 Gew.-% der Summe aus Vinylacetat, Ethylen und ungesättigten Säuren, die durch Emulsionspolymerisation in Wasser hergestellt sind, zur Modifizierung, vorzugsweise Schlagfestmodifizierung von Polyvinylchlorid (PVC).

Bevorzugte Produkte enthalten 30 bis 65 Gew.-% Vinylacetat, 60 bis 40 Gew.-% Ethylen und 0.3 bis 10 Gew.-% ungesättigte Säuren, bezogen jeweils wieder auf 100 Gew.-% der Summe aus Vinylacetat, Ethylen und ungesättigten Säuren.

Derartige Copolymere auf Basis von Vinylacetat und Ethylen und ihre Herstellung sind bekannt (s. beispielsweise DE-AS 1 495 645, DE-OS 2 250 517, DE-OS 2 309 368 und DE-OS 2 431 410).

Aus der EP-OS 0 039 451 ist ein Verfahren zur kontinuierlichen Herstellung von Polymerdispersionen unter Druck beschrieben. Als Monomere kommen insbesondere Ethylen und gegebenenfalls Vinylchlorid und/oder Vinylacetat in Betracht. Die Polymerisation wird in Gegenwart von Salzen von ungesättigten Säuren durchgeführt. Der gemäß Beispiel 7 erhaltene Latex ist als Bindemittel für Innen-und Außenanstriche geeignet.

Demgegenüber wird das Ethylen-Vinylacetat-Copolymerisat des Beispiels 9, das keine ungesättigten Säuren oder Salze von ungesättigten Säuren einpolymerisiert enthält, zur Herstellung von schalgfestem PVC empfohlen.

Die Qualität derartiger Säuregruppen-freier Latices als PVC-Modifikatoren ist jedoch im Vergleich zu den erfindungsgemäßen Modifikatoren auf Basis säuregruppenhaltiger EVAC-Copolymerisate weit unterlegen.

Es ist außerdem bekannt und technisch bislang ausschließlich genutzt, Ethylen-Vinylacetat-Copolymere aus Masse-oder Lösungspolymerisation zur PVC-Modifizierung einzusetzen (DE-AS 1 494 127).

Ein Nachteil der auf solche Weise hergestellten Polymerisate ist, daß sie als elastische Granulate mit starker Verklebungstendenz anfallen, die schwierig mit PVC direkt abgemischt werden können. Praktisch können sie nur über eine Pfropfpolymerisation mit Vinylchlorid in eine handhabbare Form gebracht werden.

Die Verwendung von EVA-Emulsionen hätte den Vorteil, daß sie ohne weiteres mit PVC zu sehr homogen-dispersen Mischungen abmischbar sind. Ferner könnte man die optimale Teilchengröße der EVA-Dispersion im PVC im Falle von Latexteilchen durch gezielte Vernetzung noch stabilisieren. Dies ist bei Einarbeitung von Granulaten aus Lösungs-oder Massepolymerisation nicht möglich.

Bisherige EVA-Copolymere, die durch Emulsionspolymerisation ohne einpolymerisierte Säuren hergestellt wurden, sind aus verschiedenen Gründen, die strukturell bedingt sein können, aber auch durch die Mitverwendung höherer Anteile von Polymerisationshilfsmitteln verursacht werden können, technisch nicht geeignet. Vor allem ergeben sie eine unzureichende Thermostabilität des modifizierten PVC's.

Durch die erfindungsgemäße Verwendung der säure-modifizierten Ethylen-Vinylacetat-Copolymerisate erhält man dazu eine gute Thermostabilität der resultierenden Abmischungen mit PVC, vergleichbar mit Mischungen auf Basis eine EVA-Masse-oder Lösungspolymerisates, wobei jedoch diesem gegenüber die Einarbeitung wesentliche Vorteile bietet, wie oben beschrieben.

Geeignete ungesättigte Carbonsäuren sind Halbester der Maleinsäure sowie Itaconsäure, Acrylsäure oder Methacrylsäure. Im Copolymerisat liegen die Säuregruppen hierbei zumindest teilweise in Form ihrer Salze vor.

Geeignete ungesättigte Sulfonsäuren sind beispielsweise Vinylsulfonsäure, Allylsulfonsäure, Methallylsulfonsäure, Acrylamidderivate der Formel (I)

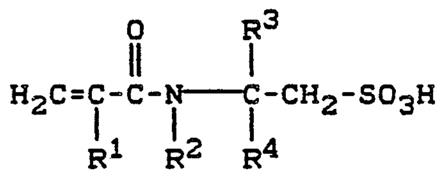

(I),

in welcher

$R_1$ für H, $CH_3$,

$R_2$ für H, $CH_3$, $C_2H_5$,

$R_3$ und $R_4$ unabhängig voneinander für $CH_3$, $C_1$-$C_8$-Alkyl stehen.

Beispielhaft für ungesättigte Phosphonsäuren seien vinylphosphonsäure, Allylphosphonsäure oder ihre Derivate.

In den erfindungsgemäß zu verwendenden Copolymerisaten liegen die Säuregruppen teilweise in Form ihrer Alkali-(Li-, Na-, K-) oder Ammoniumsalze vor.

Die Herstellung der erfindungsgemäß zu verwendenden Copolymerisate kann sowohl diskontinuierlich als auch kontinuierlich erfolgen. Bevorzugt ist die kontinuierliche Herstellung, beispielsweise gemäß EP-OS 0 039 451.

Als Polymerisations-Hilfsmittel zur Stabilisierung der Emulsionen können in geringen Mengen Emulgator und Schutzkolloide zugesetzt werden. Das Einpolymerisieren der sauren Gruppen gestattet es auch, die Emulsionspolymerisation vorteilhafterweise ohne diese Hilfsmittel durchzuführen, was zu einer weiteren Erhöhung der Thermostabilität der PVC-Compounds führt.

Als Initiatoren zur Polymerisation werden wasserlösliche Radikalbildner wie Persulfate, $H_2O_2$ oder wasserlösliche Azoverbindungen verwendet. Mit Hilfe von Puffer-Substanzen wird der gewünschte pH-Wert, vorzugsweise zwischen pH 8 bis pH 4 eingestellt. Durch die pH-Einstellung wird auch festgelegt, in welchem Verhältnis Carboxylgruppen neben den carbonsauren Salzen einpolymerisiert werden sollen.

Die stabilisierende Wirkung der sauren Grupen kann vorzugsweise dadurch verbessert werden, daß man Salze von Kationen mehrwertiger, vorzugsweise zweiwertiger Metalle herstellt wie Cd, Pb, Sn, Ba, Zn, die auch für die PVC-Stabilisierung bekannt sind.

Zweckmäßigerweise wird die Salzbildung mit den mehrwertigen Kationen durch Einmischen entsprechender Hydroxyde, Oxyde oder Acetate in die fertigen EVA-Latices hergestellt.

Die erfindungsgemäß zu verwendenden Copolymerisate können auch vernetzt sein, ohne daß Einarbeitungsprobleme auftreten, wie sie bei vernetzten Copolymerisaten, die nicht nach Emulsionpolymerisation hergestellt sind, bekannt sind.

Als Vernetzer eignen sich bi-oder polyfunktionelle Vinylmonomere wie beispielsweise Divinyladipat.

Die Partikelgröße in den erhaltenen EVA-Emulsionen liegt zwischen 80 bis 800 nm, vorzugsweise zwischen 250 - 500 nm, die sich durch die Mitverwendung der ungesättigten Säuren besonders gut herstellen lassen.

Die erfindungsgemäßen EVA-Copolymerisate können in verschiedener Art und Weise mit PVC kombiniert werden. Die einfachste Art ist es, den EVA-Latex mit PVC-Pulver oder PVC-Suspensionen zu vermischen und gemeinsam aufzuarbeiten. Die Mengenverhältnisse zwischen dem erfindungsgemäßen EVA-Produkt und PVC sollen 2 - 10 Gew.-%, vorzugsweise 4 - 8 Gew.-% EVA und 98 - 90 Gew.-% vorzugsweise 96 - 92 Gew.-% PVC betragen. Man kann auch den Weg der Herstellung eines master-batch beschreiten und an EVA höherkonzentrierte PVC-Mischungen herstellen, die dann zu dem für die Verarbeitung endgültigen Verhältnis von Modifikator und PVC abgemischt werden können.

Selbstverständlich können die durch Emulsionspolymerisation hergestellten EVA-Polymerisate auch in ihrer wäßrigen Emulsion in monomerem Vinylchlorid gelöst und einer Pfropfpolymerisation unterzogen werden, wodurch ebenfalls hervorragend schlagfeste PVC-Produkte gewonnen werden können. Ein Vorteil dieser Verfahrensweise ist, daß man schneller und einfacher EVA-VCl-Monomer-Lösungen herstellen kann als beim Einsatz von EVA-Granulaten.

Die neuen EVA-Modifikatoren zeichnen sich im Vergleich zu den bisher bekannten, durch Masse-oder Lösungspolymerisation hergestellten Produkten dadurch aus, daß sie bei gleichwertiger Wirksamkeit und Thermostabilität als schlagfestmachende Komponente mit PVC in technisch viel einfacherer und gleichmäßigerer Weise mit PVC vermischt werden können und darüberhinaus die PVC-Mischungen bei höheren Temperaturen und größeren Verarbeitungsgeschwindigkeiten verarbeitbar sind, ferner durch die Möglichkeit, vernetzte Partikel definierter Teilchengröße und Vernetzungsgrade herzustellen.

## Beispiele

A.1 Kontinuierliche Herstellung eines Ethylen/Vinylacetat-Copolymerlatex mit eingebauten Sulfogruppen

Als Apparatur dient ein VA-Autoklav mit einem freien Volumen von 42,7 l mit Ankerrührer. Die Dosierung der Lösungen und des Vinylacetats erfolgt über getrennte Dosierpumpen. Das Ethylen wird geregelt über eine Gasmengenmessung zudosiert. Die Innentemperatur wird geregelt. Es wird mit einer differenzdruckgesteuerten Füllstandsregelung gearbeitet. Der Austrag erfolgt über eine getaktete 200 ml Schleuse.

In den Autoklaven werden

29400 Gew.-Teile

eines Ethylen-Vinylacetatlatex (Polymerzusammensetzung ca. 42 Gew.-% Vinylacetat, ca. 58 Gew.-% Ethylen) mit einem Feststoffanteil zwischen 40 und 50 Gew.-% und einer mittleren Teilchengröße von 150 bis 200 nm vorgelegt. Sodann wird eine Rührerdrehzahl von 150 U/Min eingestellt und eine Lösung von

40 Gew.-Teilen Ammoniumperoxidisulfat in 500 Gew.-Teilen entionisiertem Wasser

in den Autoklaven gepumpt.

Sodann wird zur Entfernung von Sauerstoff der Autoklav auf 100 mbar evakuiert und 3 mal mit 2 bar Ethylen gespült.

Hiernach werden 50 bar Ethylen aufgedrückt und auf eine Innentemperatur von 65°C geheizt. Nachdem die Innentemperatur von 65°C erreicht wurde, werden 100 bar Ethylen aufgedrückt und die Regelung auf diesen Wert eingestellt.

Sodann werden über 3 getrennte Leitungen mit Dosierpumpen folgende Lösungen, bzw. Monomere, von oben in den Autoklaven gepumpt.

1) 2900 ml/h einer wässrigen Lösung, bestehend aus:

3,13 Gew.-Teilen Ammoniumperoxidisulfat
15,66 Gew.-Teilen $C_{12}$-$C_{14}$-Alkylsulfonat
4,70 Gew.-Teilen Acryldimethyltaurin
4,54 Gew.-Teilen Natronlauge (0,2 molare Lösung)
0,01 Gew.-Teilen Eisen-III-Komplexonatlösung (0,24 m Fe-III-nitrat; 0,48 m Dinatrium-Ethylendiamintetraessigsäure; 0,96 m Natriumhydroxid)

in 1000 Gew.-Teilen entionisiertem Wasser

2) 300 ml/h einer wäßrigen Lösung, bestehend aus:

12,15 Gew.-Teilen Natrium-hydroxymethansulfinatdihydrat (Rongalit C)
in 1000 Gew.-Teilen entionisiertem Wasser

3) 1750 ml/h destilliertes Vinylacetat

Über eine getaktete 200 ml Schleuse werden durchschnittlich 6,4 kg Latex/h ausgetragen. Der Massenanteil an Fest stoff in Prozent beträgt durchschnittlich 45. Der Ethylendruck wird über eine Regelung auf 100 bar konstant gehalten. Der Füllstand des Autoklaven wird über die Differenzdruckregelung auf 80% eingestellt.

Aus den ausgeschleusten Mengen und dem Feststoffanteil errechnet sich eine MVZ von 6,7 h und eine RZA von 68 g (Feststoff) $l^{-1}$ $h^{-1}$. Der Restmonomere enthaltende Latex ist dünnflüssig und wird nach dem Entmonomerisieren hochviskos. Falls erwünscht, kann aber die Viskosität durch Zusatz von Elektrolyten und Emulgatoren herabgesetzt werden.

Der viskose Latex bildet nach Auftrocknung einen transparenten elastischen Film. Nach der Analyse des Polymeren ergeben sich folgende Mengenanteile: (Gew.-%).

Vinylacetat 42
Ethylen 57,5
Acryldimethylaurin-Na-Salz: 0,5

Der Monomerumsatz an Vinylacetat beträgt ca. 75%. Die in Tetrahydrofuran gemessene Grenzviskositätszahl beträgt 1,1 dl/g bei 25°C.

A.2 Kontinuierliche Herstellung eines Ethylenvinylacetat-Copolymerlatex ohne eingebaute Säuregruppen (Vergleichsbeispiel).

Man verfährt, wie in Beispie A.1 angegeben, unter Änderung der zu dosierenden Lösung 1:

Es wird kein Acryldimethyltaurin eingesetzt, dafür aber die $C_{11}$-$C_{14}$-Alkylsulfonatmenge auf 20,4 Gew.-Teile erhöht.

Nach Einstellung des Reaktionsgleichgewichtes erhält man einen Festgehalt von 46 Gew.-%, entsprechend einer RZA von 70 $gl^{-1}h^{-1}$. Die Analyse des Films ergibt 41 Gew.-% Vinylacetat neben 59 Gew.-% Ethylen. Die Grenzviskositätszahl ist unverändert.

B. Beispiele zur anwendungstechnischen Prüfung

B.1 Verwendung von A.1

Es werden pulverförmige Mischungen hergestellt, wie sie für die Extrusion von Bauprofilen für den Außeneinsatz üblich sind:

Aus 940 Gew.-Teilen Suspensions-PVC (K-Wert nach Fikentscher 68), 73 Gew.-Teilen pulverförmiger Mischungen aus 60 Gew.-Teilen Polyethylenvinylacetat (hergestellt nach Beispiel A1) und 13 Gew.-Teilen Füllstoff (natürliches $CaCO_3$, oberflächenbehandelt), 35 Gew.-Teilen Bleiphosphitsulfitkomplex, 15 Gew.-Teilen Barium/Cadmium-Stabilisator fest (mind. 10 % Cd-Gehalt), 1,2 Gew.-Teilen zweibasischem Bleistearat, 2 Gew.-Teilen Calciumstearat, 12 Gew.-Teilen Wachsester, 15 Gew.-Teilen Kohlenwasserstoffwachs, 27 Gew.-Teilen feinteilige, natürliche, oberflächenbehandelte Kreide, 40 Gew.-Teilen Titandioxid (Rutil-Typ) wird in einem Heizkühlmischer (1500 Upm) in der für Hart-PVC üblichen Verfahrensweise ein Dryblend hergestellt. 500 g dieser PVC-Formmasse werden auf einer Labormischwalze unter Walzbedingungen, wie in Tabelle I beschrieben, zu einem Walzfell verarbeitet.

Zur Thermostabilitätsprüfung (siehe Tabellen II.1 und II.2) werden ca. 100 g aus obigem Walzfellmaterial entnommen. Die Ergebnisse sind in Tabelle III aufgeführt.

B.2 Verwendung von A.2 (Vergleichsversuch)

B1 wird wiederholt unter Verwendung eines Emulsionscopolymeren, hergestellt nach Beispiel A2.

B.3 Verwendung eines EVA-Lösungspolymers (Vergleichsversuch)

B1 wird wiederholt unter Verwendung eines handelsüblichen EVA-Lösungscopolymeren (MG 150 000, vinylacetatgehalt 45 Gew.-%)

Tabelle I

Walzfellherstellung:

Laborwalze, Walzenbreite 230 mm, Walzendurchmesser 110 mm, Walzendrehzahl 22:18 Upm, Walztemperatur 190°C, Walzzeit 10 Min.

Preßplattenherstellung:

Abmessung 120 × 120 × 4 mm; Vorheizen 7 Min., Pressen 3 Min. bei 24,5 $N/mm^2$, Preßtemperatur 195°C.

Tabelle II

Thermostabilitätsprüfungen

1. Umluftofen: 0,7 mm dicke Walzfelle, gewalzt bei 180°C 10', werden in einem Umluftofen (System Mathis) bei 190°C Prüftemperatur 15', 30', 45', 60', 90', 120' geprüft und der Grad der Verfärbung als Maß für Thermostabilität beurteilt.

2. Prüfung der thermischen Stabilität nach DIN 53381 Blatt 1 (Kongorotpapier-Verfahren): 0,7 mm dicke Walzfellproben werden in kleine Stücke geschnitten (PKt. 2.3 o.g. DIN) und bei 200°C Prüftemperature die Zeitdauer bis zum Farbumschlag des Kongorotpapiers von rot nach blau (Chlorwasserstoffabspaltung) gemessen.

Tabelle III

**Prüfergebnisse**

| | Beispiele | | |
|---|---|---|---|
| | B1 | B2 | B3 |
| Verfärbung II.1, 120' | schwach gelblich | gelb-braun | schwach gelblich |
| Verfärbungs-zeit II.2 | 182 Min. | 138 Min. | 184 Min. |

## Ansprüche

1. Verwendung von Copolymeren aus 20 - 79.9 Gew.-% Vinylacetat, 79.9 - 20 Gew.-% Ethylen und 0.1 - 20 Gew.-% einer ungesättigten Carbonsäure und/oder Sulfonsäure und/oder Phosphonsäure, bezogen jeweils auf 100 Gew.-% an Vinylacetat, Ethylen und ungesättigten Säuren, die durch Emulsionspolymerisation in Wasser hergestellt sind, zur Modifizierung von Polyvinylchlorid.

2. Verwendung von Copolymeren aus 30 - 65 Gew.-% Vinylacetat, 60 - 40 Gew.-% Ethylen und 0.3 - 10 Gew.-% ungesättigte Säuren gemäß Anspruch 1.

3. Verwendung der Copolymeren gemäß Anspruch 1 in Mengen von 2 bis 10 Gew.-%, bezogen auf das Gesamtgewicht aus Copolymer und PVC.

4. Verwendung der Copolymeren gemäß Anspruch 1 in Mengen von 4 bis 8 Gew.-%, bezogen auf Gesamtgewicht aus Copolymer und PVC.